# EUROPÄISCHE PATENTSCHRIFT

(11) **EP 2 529 143 B1**
(45) Veröffentlichungstag und Bekanntmachung des Hinweises auf die Patenterteilung: **10.07.2019**
(21) Anmeldenummer: 10795700.3
(22) Anmeldetag: 20.12.2010
(51) Int. Cl.: F16M 11/00, F16M 11/04, F16M 13/02, E04H 12/22, H02G 3/08

(54) **ADAPTER ZUR BEFESTIGUNG EINES TRAGPROFILS**
ADAPTER FOR FASTENING A PROFILED SUPPORT ELEMENT
ADAPTATEUR POUR LA FIXATION D'UN PROFILÉ SUPPORT

(30) Priorität: 26.01.2010 DE 102010000207
(43) Veröffentlichungstag der Anmeldung: 05.12.2012
(73) Patentinhaber: RITTAL GmbH & Co. KG, 35745 Herborn (DE)
(72) Erfinder: KOERNER, Stefan, 35753 Eschenburg (DE); NEUHOF, Markus, 35630 Ehringshausen-Niederlemp (DE); ROOT, Paul, 35080 Bad Endbach (DE)
(74) Vertreter: Angerhausen, Christoph
(86) Internationale Anmeldenummer: PCT/EP2010/070289
(87) Internationale Veröffentlichungsnummer: WO 2011/091915

(56) Entgegenhaltungen:
- DE-C1- 3 805 425
- DE-U1- 29 615 033
- US-A- 3 563 502
- US-A- 5 144 780
- US-A1- 2006 092 646
- US-A1- 2008 135 713

## Beschreibung

Die Erfindung betrifft einen Adapter zur Befestigung eines Tragprofils mit einer Profilaufnahme, die einen Stützabschnitt aufweist, und mit einer Befestigungsseite, die zumindest bereichsweise im Abstand zu dem Stützabschnitt steht, wobei zwischen dem Stützabschnitt und der Befestigungsseite ein Kabelrangierraum gebildet ist, der in räumlicher Verbindung mit einer Durchführung des Stützabschnitts und wenigstens einer Kabeldurchführung steht. Ein derartiger Adapter ist aus der US 3,563,502 A bekannt. Einen ähnlichen Adapter beschreibt auch die DE 38 05 425 C1.

Solche Adapter werden bei Tragarmsystemen verwendet. Tragarmsysteme bestehen in der Regel aus einem oder mehreren Tragprofilen und Adapterteilen. Als Adapterteile werden beispielsweise Wand-/Bodenbefestigungen eingesetzt, die mit einer Wand oder Bodenfläche verschraubt werden können. In die Profilaufnahme des Adapters lässt sich ein Tragprofil einsetzen und darin sichern. Über den Adapter werden wand- oder bodenseitige Kabel in den Innenraum des Tragprofils geführt. Hierzu weist das Tragprofil einen in Längsrichtung verlaufenden Kabelkanal auf. Um eine geordnete Kabeleinführung zu gewährleisten, wird das aus der Wand bzw. dem Boden kommende Kabel durch einen Durchbruch in dem Stützabschnitt hindurchgeschleift. Der Durchbruch steht in Flucht zu dem Kabelkanal des Tragprofils. Nun kann es häufig vorkommen, dass mehrere Kabel über den Adapter in das Tragprofil eingeführt werden müssen, wobei diese Kabel nicht an der gleichen Stelle der Wand bzw. des Bodens herausgeführt sind. Dann wird das Tragprofil mit einem Fräser seitlich geöffnet, wodurch ein Zugang zu dem Kabelkanal des Tragprofils entsteht. Das Kabel kann dann in die entstandene Durchführung eingeschoben werden. Da diese Vorgehensweise aufwändig ist, werden mitunter offene Kabelkanäle in Tragprofilen vorgesehen. Diese lassen sich mit einer Abdeckung verschließen. Wenn nun also ein Kabel seitlich zugeführt werden soll, so wird die Abdeckung ausgebrochen und das Kabel einfach in den Kabelkanal des Tragprofils eingeschoben.

Diese Art der Kabelinstallation genügt nicht immer allen optischen Ansprüchen.

Es ist daher Aufgabe der Erfindung, einen Adapter der eingangs erwähnten Art zu schaffen, mit dem seitlich zuführende Kabel auf einfache Weise in das Tragprofil eingeleitet werden können. Diese Aufgabe wird dadurch gelöst, dass im Bereich einer Seitenwand eine weitere Kabeldurchführung auf der dem Kabelrangierraum abgewandten Seite des Stützabschnitts vorgesehen ist, wobei die weitere Kabeldurchführung eine räumliche Verbindung zwischen der Umgebung und der Profilaufnahme schafft, und wobei das Basisteil einen Ansatz aufweist, der im Bereich der weiteren Kabeldurchführung verläuft und seitlich ausladend über die Seitenwand vorsteht. Der Ansatz weist einen oder mehrere Durchbrüche auf, die in die Befestigungsseite münden. Die Kabeldurchführung und die Durchbrüche sind mit einem gemeinsamen Deckel verschließbar.

Über die Kabeldurchführung ist einen nachträgliche Kabelinstallation bei bereits installiertem Adapter möglich. In diesem Fall wird das Kabel durch die weitere Kabeldurchführung hindurchgeschleift und seitlich über die Mantelfläche des Tragprofils in das Tragprofil eingeführt. Hierbei erweist es sich insbesondere als vorteilhaft, wenn das Tragprofil einen seitlich geöffneten Kabelkanal aufweist, der unmittelbar in Flucht zu der weiteren Kabeldurchführung steht. Dann muss insbesondere keine spanende Nachbearbeitung an dem Tragprofil vorgenommen werden.

Erfindungsgemäß weist der Ansatz eine erste und eine zweite an jeweils eine weitere der die Profilaufnahme umgebenden Seitenwände einteilig angeformte Wandung auf, die mit dem Deckel einen räumlichen Abschluss zur Umgebung bildet.

Auf diese Weise ergibt sich eine einfache Konstruktion und zusätzlich eine stabile Bauweise, die insbesondere für den Einsatz im rauen Industriebetrieb geeignet ist.

Über die Durchführung können die zentral aus dem Boden bzw. der Wand kommenden Kabel direkt in das Tragprofil in bekannter Weise eingeführt werden. Wenn nun ein zusätzliches Kabel seitlich eingeführt werden soll, so ist dies einfach über die zusätzliche Kabeldurchführung möglich, die ebenfalls in den Kabelrangierraum mündet. Im Kabelrangierraum kann das Kabel gemeinsam mit dem aus dem Boden bzw. der Wand kommenden Kabel dann in den Kabelkanal des Tragprofils eingeschleift werden. Mit dem Adapter lässt sich somit eine geordnete Einführung eines seitlich zuführenden Kabels in optisch ansprechender Weise verwirklichen.

Gemäß einer bevorzugten Erfindungsvariante kann es vorgesehen sein, dass zwei Kabeldurchführungen an gegenüberliegenden Seiten in den Kabelrangierraum münden oder dass an jeweils paarweise gegenüberliegenden Seiten vier Kabeldurchführungen in den Kabelrangierraum münden. Hierdurch wird die Flexibilität des Adapters weiter erhöht.

Ein erfindungsgemäßer Adapter kann dadurch gekennzeichnet sein, dass die Kabeldurchführung bzw. die Kabeldurchführungen mittels angeformter und ausbrechbarer Verschlussstücke verschlossen sind.

Der Anwender kann nun abhängig von seinem individuellen Installationsfall entscheiden, welche der Kabeldurchführungen er verwenden möchte. Er muss dann lediglich bei dieser das Verschlussstück ausbrechen, um sich Zugang zum Kabelrangierraum zu verschaffen. Die übrigen Kabeldurchführungen kann er verschlossen lassen, sodass die Dichtigkeit in diesem Bereich beibehalten ist.

Erfindungsgemäß kann es vorgesehen sein, dass der Kabelrangierraum mittels der Kabeldurchführungen in Richtung quer zu der von der Befestigungsseite gebildeten Befestigungsebene her zugänglich ist, damit die problemlose seitliche Kabeldurchführung möglich wird. Hierbei erweist es sich dann insbesondere von Vorteil, wenn die Kabeldurchführungen zur Befestigungsseite hin geöffnet sind. Dann können die bereits installierten Kabel bei der Montage des Adapters seitlich in die Kabeldurchführungen eingesetzt werden.

Eine stabile Befestigung und eindeutige Ausrichtung des an den Adapter angeschlossenen Tragprofils wird dadurch möglich, dass auf der dem Kabelrangierraum abgewandten Seite des Stützabschnitts eine Profilaufnahme gebildet ist, die von Stützflächen zur Anlage der Außengeometrie eines in die Profilaufnahme einsetzbaren Tragprofils begrenzt ist.

Die Erfindung wird im Folgenden anhand eines in den Zeichnungen dargestellten Ausführungsbeispieles näher erläutert. Es zeigen:
- Figur 1: in perspektivischer Seitenansicht einen Adapter;
- Figur 2: eine Stirnansicht auf ein Tragprofil;
- Figur 3: den Adapter gemäß Figur 1 in perspektivischer Ansicht von unten und in Kombination mit dem Tragprofil gemäß Figur 2;
- Figur 4: die Baueinheit gemäß Figur 3 in perspektivischer Seitenansicht; und

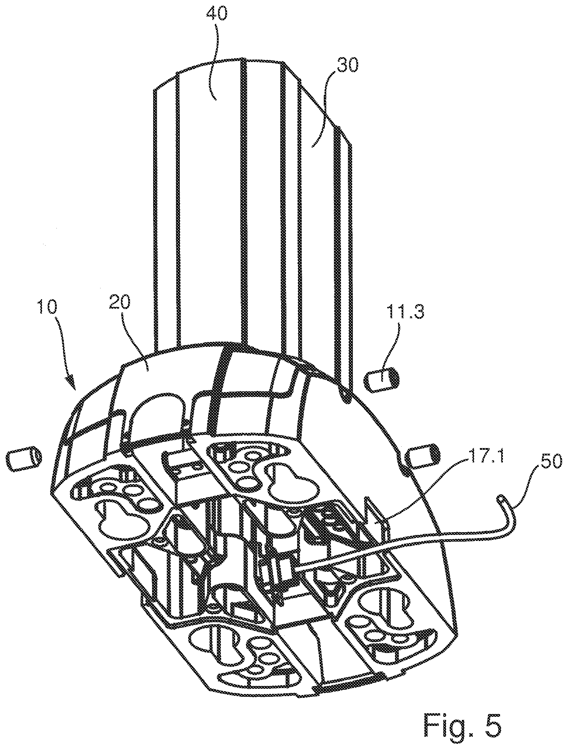

- Figur 5: die Baueinheit gemäß den Figuren 3 bzw. 4 in perspektivischer Ansicht von unten.

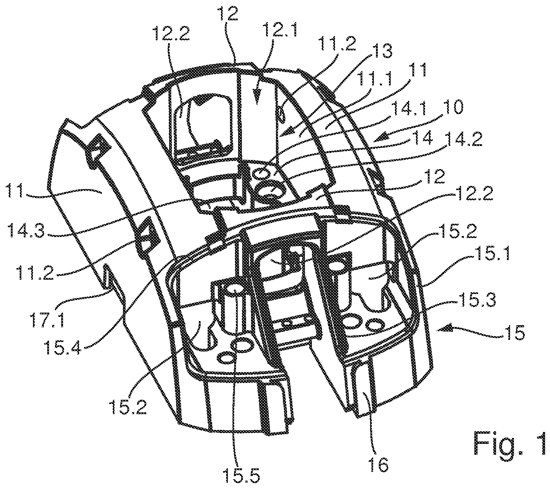

Figur 1 zeigt einen Adapter, nämlich eine Wand-/Bodenbefestigung für ein Tragarmsystem. Der Adapter weist ein Basisteil 10 auf, das mit Seitenwänden 11 und 12 eine Profilaufnahme 13 umgibt. Die Seitenwände 11 und 12 bilden Stützflächen 11.1 bzw. 12.1, die der Profilaufnahme 13 zugekehrt sind. Bodenseitig wird die Profilaufnahme 13 von einem Stützabschnitt 14 begrenzt, der im Bereich der beiden gegenüberliegenden Seitenwände 11 jeweils Stützflächen bildet. Dabei liegen die beiden Stützflächen in einer Ebene und dienen zur Abstützung der planen Stirnseite eines Tragprofils 30, wie es später näher erläutert wird.

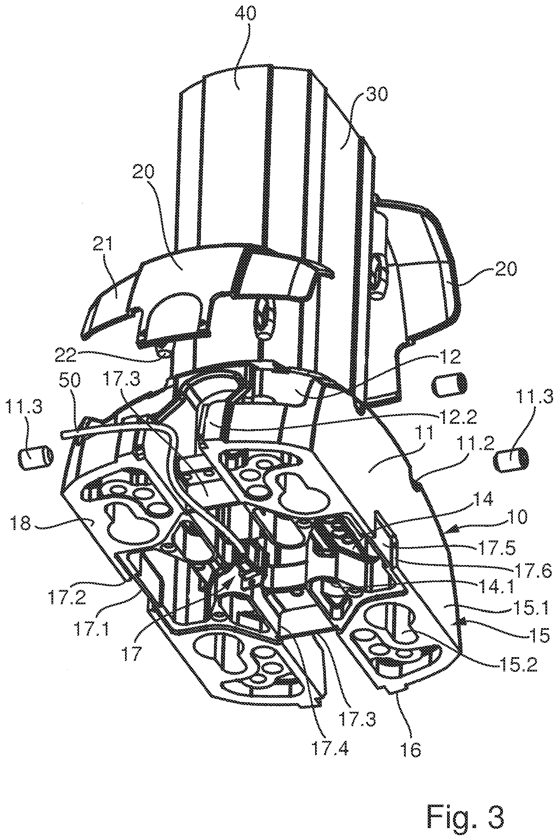

In den Stützabschnitt 14 sind als Durchgangsbohrungen Befestigungsaufnahmen 14.1 eingebracht. Weiterhin weist der Stützabschnitt 14 Justieraufnahmen 14.2 auf. Der Stützabschnitt 14 ist von einer Durchführung 14.3 durchbrochen. Diese Durchführung 14.3 schafft Zugang zu einem Kabelrangierraum 17. Der Kabelrangierraum 17 lässt sich deutlicher der Figur 3 entnehmen. Wie diese Darstellung veranschaulicht, steht der Kabelrangierraum 17 über die Durchführung 14.3 in räumlicher Verbindung mit der Profilaufnahme 13. Der Kabelrangierraum 17 endet im Bereich der Unterseite des Adapters in einer Befestigungsseite 18. Diese Befestigungsseite 18 steht plan parallel zu der von dem Stützabschnitt 14 gebildeten Stützfläche für das Tragprofil 30.

Der Kabelrangierraum 17 ist zur Unterseite des Adapters, also durch die Befestigungsseite 18 hindurch geöffnet. Damit kann ein aus dem angeschlossenen Boden bzw. der Wand kommendes Kabel 50 unmittelbar in den Kabelrangierraum 17 eingeführt, durch die Durchführung 14.3 durchgeschleift und in den Bereich der Profilaufnahme 13 verbracht werden. Weiterhin weist der Adapter an paarweise gegenüberliegenden Seiten ausbrechbare Verschlussstücke 17.1, 17.3, 17.5 auf. Diese sind über Sollbruchstellen an den Adapter derart angebunden, dass sie mit einem Werkzeug, bspw. einem Schraubenzieher, leicht ausgebrochen werden können. Bei ausgebrochenen Verschlussstücken 17.1, 17.3, 17.5 entstehen Kabeldurchführungen 17.2, 17.4, 17.6. Wie die Figur 3 veranschaulicht, können über diese Kabeldurchführungen 17.2, 17.4, 17.6 seitlich Kabel 50 zugeführt werden. Die Kabeldurchführungen 17.2, 17.4, 17.6 sind zur Befestigungsseite 18 hin geöffnet, sodass auch auf einfache Weise mit Steckerelementen vorkonfektionierte Kabel 50 in den Bereich des Kabelrangierraumes 17 eingebracht werden können. Durch die großzügig dimensionierte Durchführung 14.3 können die Stecker dieser Kabel auch bequem hindurchgeschoben und in dem Bereich der Profilaufnahme 13 gebracht werden.

Die Figur 1 lässt weiter erkennen, dass zusätzlich zu den Kabeldurchführungen 17.2, 17.4, 17.6 weitere Kabeldurchführungen 12.2 im Bereich der Seitenwände 12 vorgesehen sind. Diese weiteren Kabeldurchführungen 12.2 schaffen eine räumliche Verbindung zwischen der Umgebung und der Profilaufnahme 13. Die weiteren Kabeldurchführungen 12.2 sind im Bereich von Ansätzen 15 angeordnet, die seitlich ausladend über die Seitenwände 12 vorstehen. Die Ansätze 15 weisen plattenförmige Abschnitte auf, die mit schlüssellochartigen Durchbrüchen 15.2 versehen sind. Seitlich sind die Ansätze 15 mit Wandungen 15.1 ausgestattet, die optisch ansprechend in die Außenflächen der Seitenwände 12 übergehen. Weiterhin weist der Ansatz 15 jeweils zwei Klemmaufnahmen 15.5 auf, die zur Fixierung eines Deckels 20 dienen. Die Gestaltung des Deckels 20 lässt sich näher aus der Figur 3 ersehen. Wie diese Darstellung zeigt, weist der Deckel 20 zwei seitliche Ansätze 21 auf, die jeweils ein zapfenförmiges Klemmelement 22 mit angeformten Federelementen trägt. Die Klemmelemente 22 können in die zugeordnete Klemmaufnahme 15.5 derart eingeschoben werden, dass sie sich mit ihren Federelementen darin treibschlüssig verklemmen. Bei montiertem Deckel 20 liegt dieser mit seiner randförmigen Abmessungsbegrenzung an einem Rand 15.4 des Ansatzes 15 auf und stützt sich daran ab. Im Mittelbereich des Ansatzes 15 begrenzen zwei zueinander parallele Begrenzungswände 15.3 die weitere Kabeldurchführung 12.2. Der Deckel 20 stützt sich auch auf den freien Enden dieser Begrenzungswände 15.3 ab, sodass eine sichere Festlegung des Deckels 20 erreicht ist.

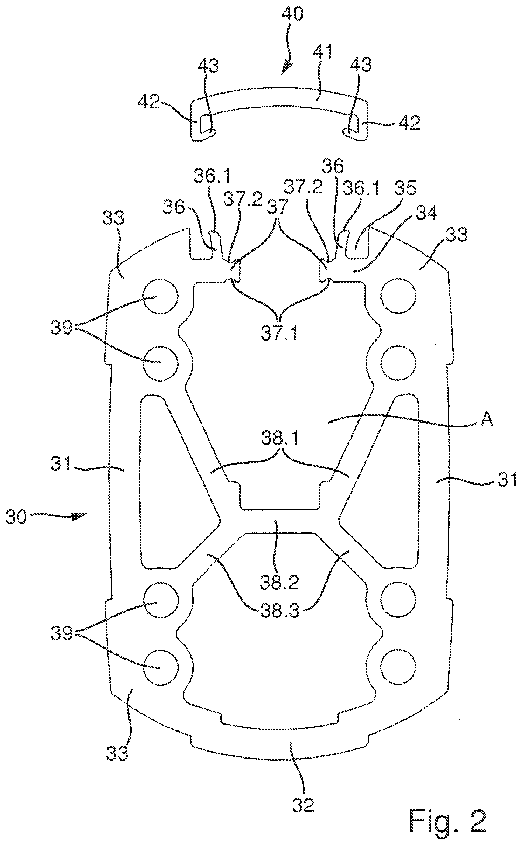

In der Figur 2 ist ein als Aluminium-Strangpressprofil ausgebildetes Tragprofil 30 gezeigt. Dieses Tragprofil 30 weist zwei zueinander parallele Seitenwände 31 auf, die an ihren längsseitigen Enden mit Eckstücken 33 abschließen. Die beiden unteren Eckstücke 33 sind mittels eines Übergangsstückes 32 einteilig miteinander verbunden. Die beiden oberen Eckstücke 33 tragen jeweils einen Ansatz 37, der stegartig ausgebildet ist und in Profillängsrichtung einen Einführöffnung begrenzt. In die beiden Ansätze 37 sind zwei Vertiefungen 37.1 und 37.2 in Form von Nuten eingearbeitet. Diese Vertiefungen 37.1 und 37.2 erstrecken sich in Profillängsrichtung. Der Ansatz 3 trägt weiterhin ein nach oben abstehendes Gegenrastelement 36 an das endseitig ein Rastvorsprung 36.1 angeformt ist. Das Gegenrastelement 36 begrenzt zusammen mit einer Wandung des Eckstückes 33 eine Nut 35. Wie vorstehend bereits erwähnt, begrenzen die beiden Ansätze 37 eine Einführöffnung, durch die hindurch ein Aufnahmeraum A zugänglich ist. Der Aufnahmeraum A wird dabei von Bereichen der beiden oberen Eckstücke 33 der Ansätze 37 und von Begrenzungsstegen 38.1 umgeben. Die Begrenzungsstege 38.1 schließen jeweils endseitig einteilig an die oberen Eckstücke 33 an und erstrecken sich im Winkel einwärts gerichtet zur Profilmitte hin. Die Begrenzungsstege 38.1 sind an ihrem den Eckstücken 33 abgewandten Ende an ein Verbindungselement 38.2 angeformt. Dem Aufnahmeraum A abgewandt trägt das Verbindungselement 38.2 zwei weitere Verbindungsstege 38.3. Diese sind wiederum einteilig an die beiden unteren Eckstücke 33 angeformt und verlaufen ebenfalls winklig. Mit den Begrenzungselementen 38.1 und 38.3 und dem Verbindungselement 38.2 wird eine sternförmige Aussteifungsstruktur geschaffen, die die Steifigkeit des Tragprofils 30 deutlich erhöht.

Die Eckstücke 33 sind jeweils mit zwei einteilig eingeformten Schraubkanälen 39 ausgestattet, die sich in Profillängsrichtung durchgehend erstrecken. An diesen Schraubkanälen 39 kann mittels Verbindungsschrauben der Adapter angeschraubt werden. Hierzu wird das Tragprofil 30 in die Profilaufnahme 13 eingeschoben, bis die Stirnseite des Tragprofiles 30 auf der Stützfläche des Stützabschnittes 14 zum Liegen kommt. Anschließend werden von der Unterseite des Adapters durch die Befestigungsseite 18 hindurch Befestigungsschrauben in die Befestigungsaufnahmen 14.1 eingeführt und in die zugeordneten Schraubkanäle 39 des Tragprofils 30 eingeschraubt. Das Tragprofil 30 wird dementsprechend an den in Figur 2 dargestellten äußeren vier Schraubkanälen 39 verschraubt. Die inneren Schraubkanäle 39 können zur Justierung des Tragprofils 30 gegenüber dem Adapter verwendet werden. Hierzu können in diese Schraubkanäle 39 Schrauben eingeschraubt werden. Die Schraubkanäle 39 haben linsenförmige Schraubenköpfe, die in den Vertiefungen der Justieraufnahmen 14.2 (siehe Figur 1) Platz finden. Die Justieraufnahmen 14.2 weisen Durchbohrungen auf, die mittels eines Werkzeuges durch die Befestigungsseite 18 hindurch den Zugriff auf den linsenförmigen Kopf der Schraube ermöglichen. Wenn nun die Schraube mit dem Werkzeug verdreht wird, so lässt sich die Stirnseite des Tragprofils 30 leicht gegenüber den Stützflächen des Stützabschnittes 14 verkippen, sodass eine Winkelausrichtung des Tragprofils 30 möglich wird.

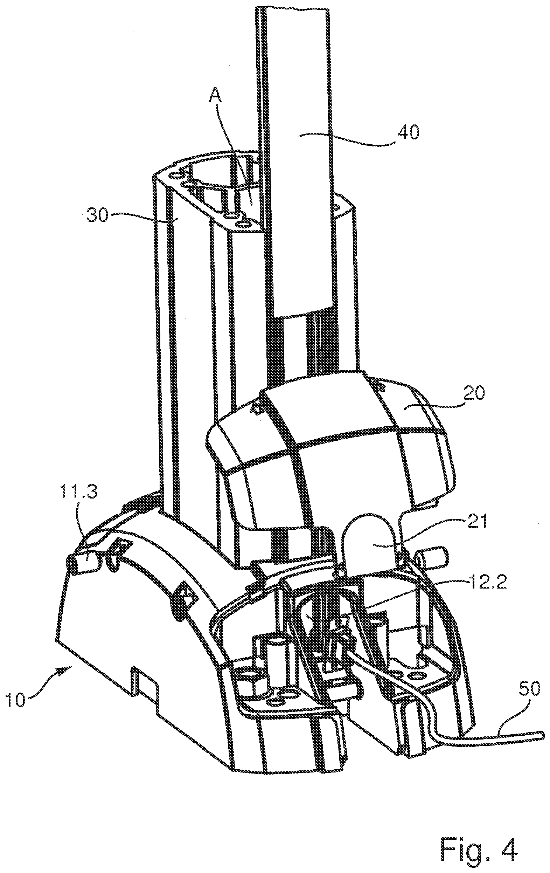

Im montierten Zustand kann sich das Tragprofil 30 mit seiner Außenkontur an den Stützflächen 11.1 und 12.1 abstützen. Für eine spielfreie Verspannung münden in die Profilaufnahme 13 Gewindeaufnahmen 11.2, die von der Außenseite der Seitenwände 11 hindurch zugänglich sind. Dementsprechend können Gewindebolzen 11.3 (siehe Figur 3) durch die Gewindeaufnahmen 11.2 hindurch geschraubt werden, bis sie an der Außenkontur des Tragprofiles 30 zur Anlage kommen und hiergegen verspannt werden. Im montierten Zustand steht, wie dies die Figur 4 veranschaulicht, das Tragprofil 30 mit seinem Aufnahmeraum A in Flucht zu der jeweils zugeordneten weiteren Kabeldurchführung 12.2. Damit kann ein Kabel 15 durch die weitere Kabeldurchführung 12.2 hindurch geschoben und in den Aufnahmeraum A des Tragprofils 30 eingeführt werden. Da die Kabeldurchführung 12.2 großzügig bemessen ist, können mit Steckerelementen vorkonfektionierte Kabel 50 hindurchgeführt werden. Auf diese Weise ist leicht eine nachträgliche Kabelinstallation bei einer bereits installierten Adaptereinheit möglich. Das Kabel 50 wird hierzu durch den von den beiden Ansätzen 37 des Tragprofiles 30 gebildeten Einführbereich in den Aufnahmeraum A geschoben. Die zwischen den Ansätzen 37 gebildete Einführöffnung kann mittels einer Abdeckung 40 überdeckt werden. Die Abdeckung 40 ist als Kunststoff-Formteil ausgebildet und weist eine konvexe Verblendung 41 auf, an die zwei nach unten abstehende Ansätze 42 einteilig angeformt sind. Die Ansätze 42 stehen zueinander parallel und im Abstand. Die freien Enden der Ansätze 42 schließen mit Rastelementen 43 ab. Zur Montage der Abdeckung 40 wird diese derart auf das Tragprofil 30 aufgesetzt, dass die Ansätze 42 in die Nuten 35 des Tragprofiles 30 eintauchen. Dabei werden die Rastelemente 43 an den Gegenrastelementen 36 nach außen ausgelenkt bis sie den Rastvorsprung 36.1 hinterschnappen. Die konvexe Verblendung 41 geht in die anschließenden Oberflächen der Eckstücke 33 über, sodass ein harmonischer Abschluss geschaffen wird, der dem Abschluss entspricht, der auf der gegenüberliegenden Seite mit dem Übergangsstück 32 gebildet ist.

## Patentansprüche

1. Adapter zur Befestigung eines Tragprofils (30), mit einer Profilaufnahme (13), die einen Stützabschnitt (14) aufweist, und mit einer Befestigungsseite (18), die zumindest bereichsweise im Abstand zu dem Stützabschnitt (14) steht, wobei der Adapter ein Basisteil (10) aufweist, das mit Seitenwänden (11, 12) die Profilaufnahme (13) umgibt, wobei zwischen dem Stützabschnitt (14) und der Befestigungsseite (18) ein Kabelrangierraum (17) gebildet ist, der in räumlicher Verbindung mit einer Durchführung (14.3) des Stützabschnitts (14) und wenigstens einer Kabeldurchführung (17.2, 17.4, 17.6) steht,
wobei im Bereich einer ersten der Seitenwände (11, 12) eine weitere Kabeldurchführung (12.2) auf der dem Kabelrangierraum (17) abgewandten Seite des Stützabschnitts (14) vorgesehen ist, wobei die weitere Kabeldurchführung (12.2) eine räumliche Verbindung zwischen der Umgebung und der Profilaufnahme (13) schafft,
wobei das Basisteil (10) einen Ansatz (15) aufweist, der im Bereich der weiteren Kabeldurchführung (12.2) verläuft und seitlich ausladend über die erste Seitenwand (12) vorsteht,
wobei der Ansatz (15) einen oder mehrere Durchbrüche (15.2) aufweist, die in die Befestigungsseite (18) münden, und
wobei die Kabeldurchführung (12.2) und die Durchbrüche (15.2) mit einem gemeinsamen Deckel (20) verschließbar sind,
**dadurch gekennzeichnet, dass** der Ansatz (15) eine erste und eine zweite an jeweils eine weitere der die Profilaufnahme (13) umgebenden Seitenwände (11) einteilig angeformte Wandung (15.1) aufweist, wobei die Wandungen (15. 1) mit dem Deckel (20) einen räumlichen Abschluss zur Umgebung bilden.

2. Adapter nach Anspruch 1,
**dadurch gekennzeichnet,**
**dass** zwei Kabeldurchführungen (17.2, 17.4, 17.6) an gegenüberliegenden Seiten in den Kabelrangierraum (17) münden.

3. Adapter nach Anspruch 2,
**dadurch gekennzeichnet,**
**dass** die Kabeldurchführungen (17.2, 17.4, 17.6) an jeweils paarweise gegenüberliegenden Seiten in den Kabelrangierraum (17) münden.

4. Adapter nach einem der Ansprüche 1 bis 3,
**dadurch gekennzeichnet,**
**dass** die Kabeldurchführung bzw. die Kabeldurchführungen (17.2, 17.4, 17.6) mittels angeformter und ausbrechbarer Verschlussstücke (17.1, 17.3, 17.5) verschlossen sind.

5. Adapter nach einem der Ansprüche 1 bis 4,
**dadurch gekennzeichnet,**
**dass** der Kabelrangierraum (17) mittels der Kabeldurchführungen (17.2, 17.4, 17.6) in Richtung quer zu der von der Befestigungsseite gebildeten Befestigungsebene her zugänglich ist.

6. Adapter nach einem der Ansprüche 1 bis 5,
**dadurch gekennzeichnet,**
**dass** die Kabeldurchführung (17.2, 17.4, 17.6) zur Befestigungsseite (18) hin geöffnet ist.

7. Adapter nach einem der Ansprüche 1 bis 6,
**dadurch gekennzeichnet,**
**dass** auf der dem Kabelrangierraum (17) abgewandten Seite des Stützabschnitts (14) eine Profilaufnahme (13) gebildet ist, die von Stützflächen (11.1, 12.1) zur Anlage der Außengeometrie eines in die Profilaufnahme (13) einsetzbaren Tragprofils (30) dienen.

## Claims

1. An adapter for fastening a support profile (30) comprising a profile receptacle (13) having a support section (14), and a fastening side (18) which at least in some areas is spaced from the supporting section (14), wherein the adapter comprises a base part (10), which surrounds the profile receptacle (13) with side walls (11, 12), wherein a cable manoeuvring compartment (17) is formed between the supporting section (14) and the fastening side (18) which is spatially connected to a feedthrough (14.3) of the support section (14) and at least one cable feedthrough (17.2, 17.4., 17.6),
wherein in the region of a first of the sidewalls (12) a further cable feedthrough (12.2) is provided on a side of the support section (14) facing away from the cable manoeuvring compartment (17), the further cable feedthrough (12.2) providing a spatial connection between the environment and the profile receptacle (13),
wherein the base part (10) comprises a tab (15) extending in the region of the further cable feedthrough (12.2) and laterally protruding beyond the first side wall (12),
wherein the tab (15) comprises one or more openings (15.2) leading into the fastening side (18), and
wherein the cable feedthrough (12.2) and the openings (15.2) can be closed by a common lid (20),
**characterized in that** the tab (15) comprises a first and a second wall (15.1) each integrally molded on one of the further side walls (11) surrounding the profile receptacle (13), the walls (15.1) forming, together with the lid (20), a spatial enclosure to the environment.

2. The adapter of claim 1, **characterized in that** two cable feedthroughs (17.2, 17.4, 17.6) lead into the cable manoeuvring compartment (17) at opposite sides.

3. The adapter of claim 2, **characterized in that** the cable feedthroughs (17.2, 17.4, 17.6) lead into the cable manoeuvring compartment (17) at pairwise opposing sides.

4. The adapter of any of claims 1 to 3, **characterized in that** the cable feedthrough or the cable feedthroughs (17.2, 17.4, 17.6), respectively, are closed by means of closure pieces (17.1, 17.3, 17.5) which are molded thereto and can be broken away therefrom.

5. The adapter of any of claims 1 to 4, **characterized in that** the cable manoeuvring compartment (17) can be accessed via the cable feedthroughs (17.2, 17.4, 17.6) in a direction transverse to the fastening plane defined by the fastening side.

6. The adapter of any of claims 1 to 5, **characterized in that** the cable feedthrough (17.2, 17.4, 17.6) is open towards the fastening side (18).

7. The adapter of any of claims 1 to 6, **characterized in that** on a side of the support section (14) facing away from the cable manoeuvring compartment (17) a profile receptacle (13) is formed which is delimited by support surfaces (11.1, 12.1) for engaging the outer geometry of a support profile (30) to be inserted into the profile receptacle (13).

## Revendications

1. Adaptateur destiné à la fixation d'un profilé support (30), avec un logement de profilé (13) qui présente un tronçon d'appui (14), et avec un côté de fixation (18) qui, au moins par endroits, est espacé du tronçon d'appui (14), l'adaptateur présentant une partie de base (10) qui entoure le logement de profilé (13) avec des cloisons latérales (11, 12), un espace de regroupement de câbles (17) étant formé entre le tronçon d'appui (14) et le côté de fixation (18), et étant en liaison spatiale avec un passage (14.3) du tronçon d'appui (14) et au moins un passage de câble (17.2, 17.4, 17.6),
un autre passage de câble (12.2) étant prévu sur le côté du tronçon d'appui (14) éloigné de l'espace de regroupement de câbles (17) dans la zone d'une première cloison des cloisons latérales (11, 12), l'autre passage de câble (12.2) créant une liaison spatiale entre l'environnement et le logement de profilé (13),
la partie de base (10) présentant une saillie (15) qui est placée dans la zone de l'autre passage de câble (12.2) et dépasse latéralement de la première cloison latérale (12),
la saillie (15) présentant une ou plusieurs traversées (15.2) qui débouchent dans le côté de fixation (18), et
le passage de câble (12.2) et les traversées (15.2) pouvant être fermés avec un couvercle (20) commun,
**caractérisé en ce que** la saillie (15) présente une première et une deuxième paroi (15.1) formée d'une seule pièce sur respectivement une autre des cloisons latérales (11) entourant le logement de profilé (13), les parois (15.1) formant avec le couvercle (20) une terminaison spatiale.

2. Adaptateur selon la revendication 1,
**caractérisé en ce que**
deux passages de câble (17.2, 17.4, 17.6) débouchent dans l'espace de regroupement de câbles (17) sur des côtés opposés.

3. Adaptateur selon la revendication 2,
**caractérisé en ce que**
les passages de câble (17.2, 17.4, 17.6) débouchent dans l'espace de regroupement de câbles (17) sur des côtés opposés par paires respectivement.

4. Adaptateur selon l'une des revendications 1 à 3,
**caractérisé en ce que**
le passage de câble ou respectivement les passages de câble (17.2, 17.4, 17.6) sont fermés au moyen de pièces de fermeture (17.1, 17.3, 17.5) formées et pouvant être brisées.

5. Adaptateur selon l'une des revendications 1 à 4,
**caractérisé en ce que**,
au moyen des passages de câble (17.2, 17.4, 17.6), l'espace de regroupement de câbles (17) est accessible à partir d'une direction transversale au plan de fixation formé par le côté de fixation.

6. Adaptateur selon l'une des revendications 1 à 5,
**caractérisé en ce que**
le passage de câble (17.2, 17.4, 17.6) est ouvert vers le côté de fixation (18).

7. Adaptateur selon l'une des revendications 1 à 6,
**caractérisé en ce que**,
sur le côté du tronçon d'appui (14) éloigné de l'espace de regroupement de câbles (17), il est formé un logement de profilé (13) qui est limité par des surfaces d'appui (11.1, 12.1) destinées à supporter la géométrie extérieure d'un profilé support (30) pouvant être inséré dans le logement de profilé (13).
